# EUROPEAN PATENT SPECIFICATION

(11) **EP 4 789 170 B1**
(45) Date of publication and mention of the grant of the patent: **23.09.2026**
(21) Application number: 24805106.2
(22) Date of filing: 25.10.2024
(51) Int. Cl.: G06T 7/33, G06T 19/20, A61C 7/00, A61C 13/00

(54) **COMPUTER-IMPLEMENTED METHOD AND CAD SYSTEM FOR AUTOMATICALLY CENTERING AND ALIGNING A 3D MESH SCAN OF A SINGLE JAW IN A CAD SYSTEM**
COMPUTER-IMPLEMENTIERTES VERFAHREN UND CAD-SYSTEM ZUR AUTOMATISCHEN ZENTRIERUNG UND AUSRICHTUNG EINES 3D-MESH-SCANS EINES KIEFERS IN EINEM CAD-SYSTEM
MÉTHODE MISE EN OEUVRE PAR ORDINATEUR ET SYSTÈME CAD POUR CENTRER ET ALIGNER AUTOMATIQUEMENT UN MAILLAGE 3D D'UNE MÂCHOIRE DANS UN SYSTÈME CAD

(30) Priority: 10.11.2023 EP 23209121
(43) Date of publication of application: 12.08.2026
(73) Proprietor: Digicuto, 13008 Marseille (FR)
(72) Inventor: KOUBI, Stefan, 13008 Marseille (FR); GALIP, Gurel, 13008 Marseille (FR); TOURBAH, Karim, 13008 Marseille (FR)
(74) Representative: A.P.I. Conseil
(86) International application number: PCT/EP2024/080242
(87) International publication number: WO 2025/098801

(56) References cited:
- WO-A1-2023/213425
- US-A1- 2011 131 014
- US-A1- 2018 333 231

## Description

### Technical Field

The subject application relates to a computer-implemented method and a CAD system for automatically centering and aligning a 3D mesh scan of a single jaw in a CAD system. Similar systems are known from US2018333231A1.

### Background Art

In the realm of dental restoration design, the use of computer-aided design (CAD) systems for creating and manipulating 3D mesh scans of patient jaws is prevalent.

However, the process of centering and aligning these 3D mesh scans within the CAD systems largely relies on manual methods.

These manual methods, due to their qualitative nature and dependence on human judgment, are prone to errors and inconsistencies.

These inaccuracies in alignment and orientation of 3D mesh scans can lead to substantial challenges in subsequent prosthetic restoration design stages.

A misaligned or poorly oriented jaw model, when imported into the CAD environment, can give rise to restorations that do not fit properly, causing discomfort to patients and possibly leading to further complications.

In addition, these issues can prolong the time required for the restoration, leading to inconvenience for both patients and dental professionals.

These drawbacks underscore the need for a more accurate and efficient approach to the process of preparing for a dental restoration.

### Summary of the subject application

As described in the accompanying claims, the subject application provides systems and methods for improving the process of preparing for a dental restoration, enhancing patient outcomes and doing the work of dental professionals more efficient and effective.

Dependent claims describe specific embodiments of the subject application.

These and other aspects of the subject application will be apparent from an elucidated based on the embodiments described hereinafter.

### Brief Description of Drawings

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale. Elements indicated by a solid line are mandatory, while elements indicated by a dotted line are optional.
Figure 1 shows a schematic flow diagram of method according to the subject application.
Figure 2 shows a 3D mesh scan in arbitrary initial orientation in a CAD system, according to the subject application.
Figure 3 shows the 3D mesh scan of figure 2 after being manually manipulated in the CAD system, according to the subject application.
Figure 4 shows a first 2D projected view of a 3D mesh scan after a step of the method of figure 1.
Figure 5 shows a second 2D projected view of a 3D mesh scan after a step of the method of figure 1.
Figure 6 shows a third 2D projected view of a 3D mesh scan after a step of the method of figure 1.
Figure 7 shows a block diagram of a system according to the subject application.

### Description of Embodiments

Because the illustrated embodiments of the subject application may, for the most part, be composed of components known to the skilled person, details will not be explained in any greater extent than that considered necessary for the understanding and appreciation of the underlying concepts of the subject application, in order not to obfuscate or distract from the teachings of the subject application.

### Problem solved by the subject application

Inventors have found a way to prevent inaccurate manual alignment and orientation of 3D dental scan data in CAD software for restoration design.

The technical problem solved by the subject application is the lack of precision when attempting to manually center and align 3D mesh scans of patient jaws within computer-aided design (CAD) systems.

These manual processes for positioning 3D dental anatomy scans in CAD are prone to errors and inconsistencies due to their qualitative nature and reliance on human judgment.

Misalignment or poor orientation of the jaw model when imported into the CAD environment reduces the accuracy of subsequent prosthetic restoration design steps.

### Solution of the subject application

Inventors have found a way to address these challenges through a computer-implemented method for automatically centering and aligning a 3D mesh scan of a single jaw in a CAD system.

This method represents a significant advancement in dental restoration preparation, offering a solution that is more accurate and efficient.

Thus, the invention aims to significantly improve the process of preparing for a dental restoration, enhancing patient outcomes and doing the work of dental professionals more efficient and effective.

In particular, the subject application involves several steps.

Firstly, it imports a 3D mesh scan that represents the full anatomical form of a single jaw into the CAD system.

Next, it analyzes the geometric properties of the 3D mesh scan using one or more analysis algorithms. This step allows the method to determine the principal dimensions of the 3D mesh scan along orthogonal axes.

After determining the dimensions of the 3D jaw object, it assigns them to the X, Y, and Z axes of the CAD system. This ensures that the 3D mesh scan is displayed correctly and accurately within the CAD system.

Then it transforms the 3D mesh scan by applying one or more translations and/or rotations. This aligns the determined principal axes with the CAD coordinate system and centers the 3D mesh scan within the CAD system.

Finally, the method displays the transformed 3D mesh scan of the single jaw in the CAD system. By providing a visual representation of the properly aligned and centered scan, the method allows dental professionals to make more informed decisions in the design and creation of dental prosthetic restorations.

In conclusion, the subject application provides a solution to the technical problems associated with manual processes in dental restoration preparation.

It offers a more precise, efficient approach, thereby improving patient outcomes and enhancing the overall process of preparing for a dental restoration.

### First aspect of the subject application: a computer-implemented method

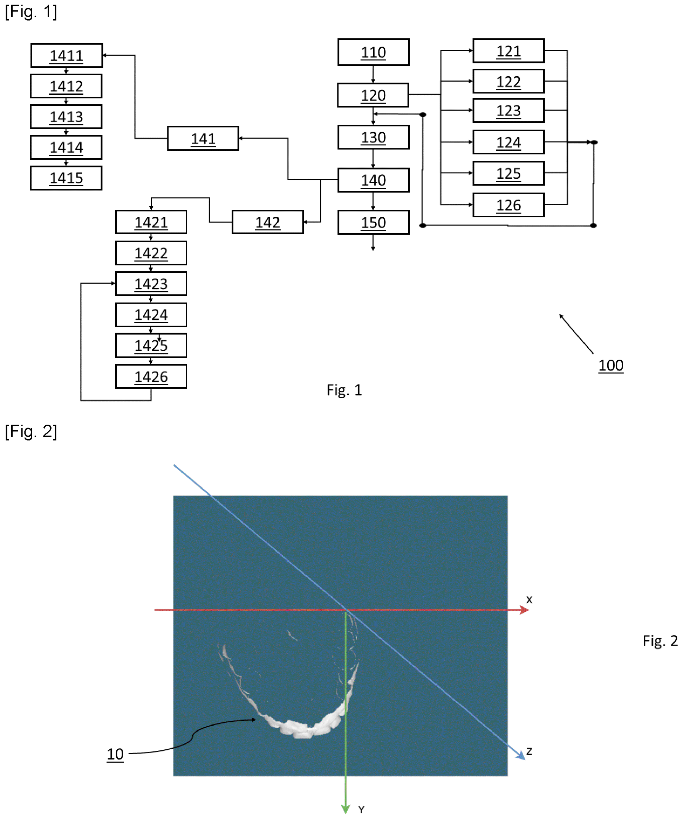

As illustrated in figure 1, the subject application relates to a computer-implemented method **100.**

In other words, the subject application involves a method that is implemented on a computer.

In the subject application, the computer-implemented method **100** is designed for automatically centering and aligning a 3D mesh scan of a single jaw in a CAD system.

As used herein, the term '3D mesh scan of a single jaw' refers to a highly accurate digital representation of a single jaw of a patient, which is created through a scanning process and depicted as a three-dimensional mesh.

The term '3D mesh' describes the structure of the digital representation - it comprises many interconnected polygons that together represent the surface of the scanned object - in this case, the single jaw.

In a first example, the geometry of a '3D mesh' jaw object is represented as a collection of interconnected triangles or facets. For instance, this is the case in the following design file formats: STL, PLY, VRML, X3D and Collada.

In a second example, the geometry of a '3D mesh' jaw object is represented as a collection of control points and weights. For instance, this is the case in the following design file formats: IGES, IGS, STEP, and SAT.

The term 'scan' refers to the process of capturing the detailed information needed to create the 3D model. This scan might be obtained through various methods, such as computed tomography (CT) or laser scanning, which are capable of capturing the intricate details of the single jaw's shape and structure.

Furthermore, as generally known in the art of dental prosthetic dental restorations, a 'CAD system' allows dental professionals to create precise and tailored designs digitally, which can then be used to produce the physical dental piece, often through methods like 3D printing or milling.

In the subject application, the 'centering and aligning' imply adjusting the position and orientation of the 3D mesh scan so that it is optimally positioned for further processing or manipulation within the CAD system.

For example, the computer-implemented method **100** may position the 3D mesh scan such that the jaw's center aligns with the origin of the X, Y, Z-coordinate system of the CAD system.

Classically, the CAD system possesses an X, Y, Z CAD coordinate system.

In other words, the CAD system is furnished with a coordinate system that is defined along three axes: X, Y, and Z.

This X, Y, Z CAD coordinate system is crucial for precise manipulation and examination of the 3D objects within the CAD software as it allows precise location of each point in a 3D mesh scan.

The X, Y, Z axes correspond to the width, height, and depth of the 3D space in the CAD system, respectively.

This enables the accurate positioning and orientation of the 3D mesh scan, which is essential for subsequent steps.

### First step of the first aspect of the subject: importing 3D mesh scan of a single jaw into CAD system

The first step **110** of the computer-implemented method **100** involves importing a 3D mesh scan.

In other words, the initial step **110** consists of bringing a 3D mesh scan into the CAD system.

To illustrate, one may consider the process of designing a dental prosthetic.

Initially, a 3D scan of the patient's jaw is conducted, for example using a dental scanner, which captures the detailed 3D geometry of a patient's jaw.

This scan generates a 3D mesh, which is a digital representation of the single jaw's shape and size.

The first step **110** of the computer-implemented method **100** is to import this 3D mesh scan into the CAD system.

This is a crucial step as it serves as the foundation for the subsequent steps in the CAD process as it provides the necessary anatomical information.

Once the 3D mesh scan is imported, the CAD system can then utilize the scan to design and fabricate the dental prosthetic.

Hence, the import of the 3D mesh scan, as described in step **110,** initiates the CAD process for dental prosthetic restorations.

In the subject application, as illustrated in figure 2, the 3D mesh scan **10,** representing the full anatomical form of a single jaw, is such that the initial orientation of the 3D mesh scan **10** is arbitrary.

In other words, the 3D mesh scan **10** digitally illustrates a comprehensive 3D digital representation of a single jaw.

Hence, the 3D mesh scan **10** includes all anatomical details and features of the single jaw, such as the teeth, the gums, and the bone structure.

The 3D mesh scan **10** captures this full anatomical form, creating a detailed digital model that can be manipulated in a CAD system.

For instance, regarding an upper jaw, it may correspond to the full impression of the jaw all the way to the end of the palate, even though some teeth are missing.

Furthermore, the 3D mesh scan **10** has an initial orientation that is random and not predetermined, meaning that it could be in any direction or angle.

Hence, there is no predetermined or specific orientation that the 3D mesh scan **10** must adhere to when it is first created or imported into the CAD system.

For instance, when a 3D scan of a patient's jaw is performed, the resulting 3D mesh scan **10** can be oriented in various ways.

It could be rotated to the left or right, tilted up or down, or placed in any other arbitrary orientation.

This could be a result of varying factors such as how the dental scanner was positioned during the scan or how the data file was saved.

Figure 2 illustrates a 3D mesh scan **10** in an arbitrary orientation within the CAD system.

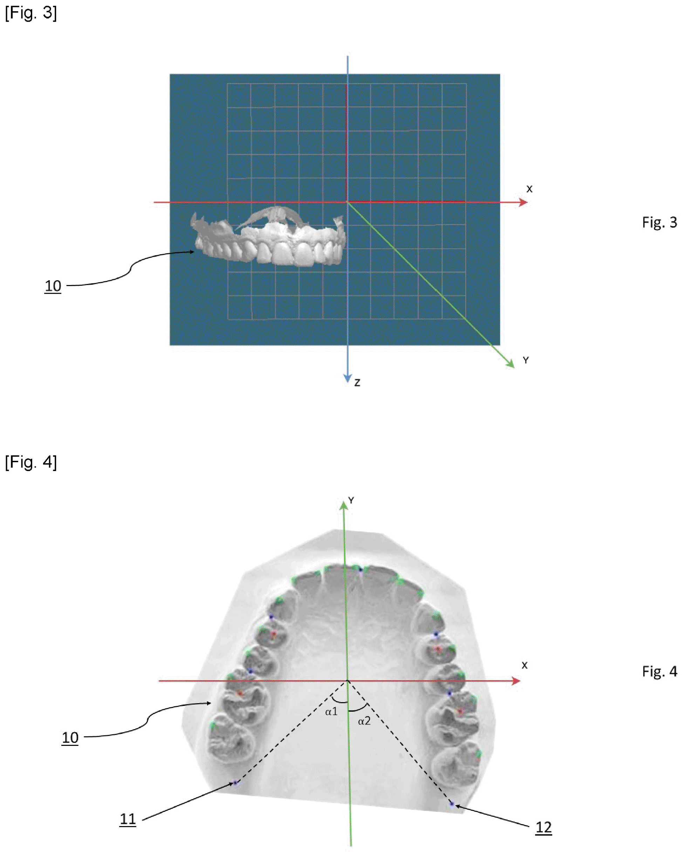

In contrast, figure 3 illustrates the 3D mesh scan **10** of figure 2 after being arbitrary manipulated in the CAD system. This is not satisfactory as already explained above.

Hence, even though the initial orientation is arbitrary, the subject application is specifically designed to handle this variability by properly positioning the 3D mesh scan **10** for further processing and design steps.

### Second step of the first aspect of the subject: analyzing geometric properties of 3D mesh scan 10

Next, in step **120,** the computer-implemented method **100** analyses the geometric properties of the 3D mesh scan **10.** This analysis is carried out using one or more analysis algorithms. The goal is to determine the principal dimensions of the 3D jaw object along orthogonal axes associated with the 3D mesh scan **10.**

In other words, the foregoing describes the examination of the geometric properties of the 3D mesh scan **10.**

This scan, which digitally represents a single jaw, is analyzed using one or more specific algorithms designed for this purpose.

The aim is to determine the main dimensions of the 3D jaw object along the orthogonal axes associated with the 3D mesh scan **10.**

As an example, one may imagine the 3D mesh scan **10** as a digital model of a single jaw. This model has specific geometric properties, such as its length, width, and height, which are its principal dimensions. Furthermore, these geometric properties might include various parameters such as surface area, volume, and shape characteristics.

In step **120,** the computer-implemented method **100** uses analysis algorithms to study these dimensions. These dimensions are associated with the orthogonal axes, which can be thought of as the X, Y, and Z axes in a 3D space.

Orthogonal axes, in this context, would be axes that are at right angles to each other, likely corresponding to the X, Y, Z-coordinate system.

By determining these dimensions, the computer-implemented method **100** can better understand the shape and size of the single jaw, which is essential for designing and creating accurate and well-fitting dental prosthetics.

### First embodiment of the one or more analysis algorithms: bounding box analysis

In a first embodiment of step **120,** the one or more analysis algorithms include a technique known as bounding box analysis **121.** The purpose of employing this bounding box analysis **121** technique is to identify the minimum and maximum vertex coordinate values along the orthogonal X, Y, and Z axes of the 3D mesh scan **10.** Essentially, the bounding box analysis **121** technique plays a crucial role in determining the dimensions of the 3D jaw object.

Put another way, the foregoing describes a first embodiment of step **120,** in which the analysis algorithms used include a technique known as bounding box analysis **121.**

This technique is commonly used in CAD and 3D modeling to determine the dimensions of a 3D object.

A bounding box is essentially an invisible 3D box that encloses the smallest possible volume around the 3D mesh scan **10.**

The reason for employing this bounding box analysis **121** technique is to recognize the smallest and largest vertex values along the determined orthogonal axes of the 3D mesh scan **10.**

Essentially, step **121** has a significant role in establishing the dimensions of the 3D jaw object along the determined orthogonal axes of the 3D mesh scan.

To clarify with a concrete example, one may consider the 3D mesh scan **10** as a digital model of a patient's jaw that consists of numerous vertices, or points, defined in three-dimensional space. Each vertex has x, y, and z coordinate values. The bounding box analysis **121** technique identifies the vertices with the smallest and largest values along each of the X, Y, and Z axes.

By finding these minimum and maximum vertex values, the bounding box analysis **121** can determine the 'bounding box' that contains the entire 3D mesh scan **10.** The dimensions of this bounding box provide an accurate indication of the jaw's size, a key factor for the design and fabrication of dental prosthetics within the CAD system.

### Second embodiment of the one or more analysis algorithms: principal component analysis

In a second embodiment of step **120,** the one or more analysis algorithms use a technique known as principal component analysis, PCA, **122.** The purpose of employing this PCA **122** technique is to calculate eigenvectors from the covariance matrix of the 3D mesh scan 10 vertex positions. Essentially, PCA **122** assists in determining the dimensions of the 3D jaw object along the orthogonal axes of major variance in the 3D mesh scan **10.**

To put it into simpler terms, the foregoing describes a second embodiment of step **120,** in which the analysis algorithms used include a technique called principal component analysis, abbreviated as PCA, **122.**

PCA is a statistical technique that's often used in data analysis to simplify the complexity of high-dimensional data while retaining trends and patterns.

The role of PCA **122** is to compute what's known as eigenvectors from the covariance matrix of the 3D mesh vertex positions, and these eigenvectors, which naturally represent the orthogonal axes of maximum variance in the 3D mesh scan 10, can then optionally be mapped to the pre-established orthogonal axes of the 3D mesh scan **10.**

To clarify with a concrete example, one may think of the 3D mesh scan **10** as a digital representation of the single jaw, comprising numerous data points or vertices. Each vertex has a specific 'position' in the 3D space of the scan. PCA **122** is kind of a process that identifies where the variance in these positions is greatest.

PCA **122** does this by transforming the original data into a new set of uncorrelated variables, known as principal components, which are ordered by the relative amount of variance they capture from the original data. These directions of greatest variance are represented by eigenvectors.

More specifically, the eigenvector corresponding to the most significant relative variance represents one dimension of the 3D mesh scan **10** data. For a typical jaw scan, it represents the longest dimension of the jaw and this is typically the left-right dimension along the dental arch, but not always depending on the specific shape and orientation.

The eigenvector with the second highest eigenvalue corresponds to the secondary direction of highest variance. For a typical jaw, it represents the medium dimension of the jaw and this is usually the front-back dimension from chin to ramus.

The third dimension, with relatively little variance, represents the shortest dimension of the jaw and is usually the vertical height.

So in essence, the eigenvalues indicate the relative amount of variance along each eigenvector direction. And the ordered eigenvectors based on eigenvalue ranking tend to align with the dimensions of the 3D mesh scan **10** from greatest to least variance.

By calculating these eigenvectors and mapping them to the orthogonal axes of the 3D mesh scan **10,** PCA **122** effectively aids in determining the main dimensions of the 3D mesh scan **10** by identifying these directions of highest relative variance.

### Third embodiment of the one or more analysis algorithms: feature matching

In a third embodiment of step **120,** the one or more analysis algorithms use a technique known feature matching **123** with a single-jaw 3D reference model. The purpose of feature matching **123** is to compare anatomical features of the 3D mesh scan **10** to corresponding anatomical features on the single-jaw 3D reference model. Ultimately, feature matching **123** assists in determining the corresponding dimensions along the determined orthogonal axes of the 3D mesh scan **10.**

In simpler terms, the foregoing describes a third embodiment of step **120,** where the analysis algorithms used include a technique called feature matching **123.**

Feature matching is a technique often employed in image and 3D model analysis to find correspondences between data sets.

This process uses a single-jaw 3D reference model, and the aim of feature matching **123** is to contrast anatomical features on the 3D mesh scan **10** with corresponding features on the single-jaw 3D reference model.

As an example, one may consider the 3D mesh scan **10** as a digital representation of a patient's jaw, with various anatomical features such as the shape and position of individual teeth, the curve of the jawline, etc. The single-jaw 3D reference model is a standard or baseline model, possibly derived from average measurements of many different jaws.

Feature matching **123** is essentially a process of comparing the anatomical features in the 3D mesh scan **10** with those of the single-jaw 3D reference model. In other words, the purpose of feature matching **123** is to identify similarities and differences between the 3D mesh scan **10** and the single-jaw 3D reference model. And by matching multiple features, similarities and differences in anatomical structure are revealed. The dimensional variations can be quantified along the orthogonal axes of the 3D mesh scan **10.**

For example, the position of the first molar may be compared between the 3D scan and single-jaw 3D reference model. If it differs in location along the X-axis, this indicates a dimensional difference in the jaw's width.

If the patient's jaw is wider than the single-jaw 3D reference model, this will be quantified and accounted for. Ultimately, the unique dimensions of the patient's anatomy are determined in relation to the standard.

By making this comparison, it assists in determining the corresponding dimensions along the determined orthogonal axes of the 3D mesh scan **10** by understanding the unique characteristics of the patient's jaw and how it relates to a standard or average model.

Then, by aligning these features and identifying correspondences, it can be determined corresponding dimensions along the orthogonal axes of the 3D mesh scan **10.**

### Fourth embodiment of the one or more analysis algorithms: iterative closest point

In a fourth embodiment of step **120,** the one or more analysis algorithms use a technique known as iterative closest point, ICP, **124,** with a single-jaw 3D reference model. The purpose of employing this ICP **124** technique is to minimize the distances between vertices and surfaces of the 3D mesh scan **10** and the single-jaw 3D reference model. In turn, this assists in determining the dimensions of the 3D jaw object along the determined orthogonal axes of the 3D mesh scan **10.**

In simpler terms, the foregoing describes a fourth embodiment of step **120,** where the employed analysis algorithms used include a technique called iterative closest point, or ICP, **124.**

ICP is a computational algorithm widely used for aligning two 3D models or point clouds to minimize the difference between them. This technique is applied in conjunction with a single-jaw 3D reference model.

The main objective of using ICP **124** is to reduce the distances between the points and surfaces of the 3D mesh scan **10** and the single-jaw 3D reference model.

As an example, one may consider the 3D mesh scan **10** as a digital representation of a patient's jaw, made up of numerous data points or vertices. The single-jaw 3D reference model, on the other hand, is a kind of 'standard' model that can be used for comparison. In practice, the single-jaw 3D reference model is already aligned with the CAD coordinate system.

ICP **124** is a method that aims to align the 3D mesh scan **10** with the single-jaw 3D reference model by iteratively adjusting the 3D mesh scan **10** and minimizing the distances between corresponding vertices and surfaces.

In particular, ICP **124** operates by iteratively adjusting the 3D mesh scan **10**'s position and orientation to minimize the distances between corresponding vertices and surfaces of the 3D mesh scan **10** and the single-jaw 3D reference model. This process continues until the algorithm converges to an optimal alignment where the overall differences are minimized.

In practice, ICP **124** starts by selecting points on the 3D mesh scan **10** (the source dataset) and trying to find the closest points on the single-jaw 3D reference model (the target dataset). These pairs of points are the 'corresponding' vertices mentioned above.

ICP **124** then calculates the transformation (translation and/or rotation) that would best align the selected points on the 3D mesh scan **10** with their corresponding points on the single-jaw 3D reference model. It applies this transformation to the entire 3D mesh scan **10,** not just the selected points.

ICP **124** repeats this process - selecting points, finding correspondences, calculating the best transformation, and applying it - until it converges on an optimal alignment where the overall differences (i.e., distances between corresponding vertices) are minimized.

By iteratively aligning the 3D mesh scan 10 with the reference model in this manner, ICP **124** supports the determination of the dimensions of the 3D jaw object along the orthogonal axes of the 3D mesh scan **10** by aligning the 3D mesh scan **10** as closely as possible to the single-jaw 3D reference model, which aids in accurately determining the dimensions of the 3D jaw object along the orthogonal axes of the 3D mesh scan **10.**

### Fifth embodiment of the one or more analysis algorithms: surface pattern analysis

In a fifth embodiment of step **120,** the one or more analysis algorithms involve applying surface pattern analysis **125** across segmented regions of the 3D mesh scan **10** and corresponding segmented regions of a single-jaw 3D reference model. The main objective of pattern analysis **125** is to match patterns and determine alignments between the regions. This technique assists in determining the dimensions of the 3D jaw object along the determined orthogonal axes of the 3D mesh scan **10.**

In simpler terms, the foregoing describes a fifth embodiment of step **120,** where the analysis algorithms used include a technique called surface pattern analysis **125.**

Surface pattern analysis involves studying the patterns or textures found on the surfaces of the 3D model, in order to identify and compare distinctive features such as morphological ridges, valleys, and other surface textures. This process is applied across segmented regions of the 3D mesh scan **10** and matching segmented regions of a single-jaw 3D reference model.

The main goal of pattern analysis **125** is to match patterns and establish alignments between these regions.

As an example, one may imagine the 3D mesh scan **10** as a digital representation of a patient's jaw, divided into various segments, each with distinct patterns. Similarly, the single-jaw 3D reference model, a 'standard' model for comparison, is also segmented, and each segment has its own patterns.

Surface pattern analysis **125** is a method that seeks to match the patterns of each segment in the 3D mesh scan **10** with the corresponding segment in the single-jaw 3D reference model and determine their alignment.

In practice, the 3D mesh scan **10** needs to be segmented into various parts, such as the front and back, left and right halves, and individual tooth sockets. Each of these segments has distinct patterns or textures on its surface - ridges, valleys, and other features that correspond to the patient's unique anatomy.

Also, the single-jaw 3D reference model is similarly segmented into corresponding parts. Each segment of the single-jaw 3D reference model has its own patterns or textures, representing the 'standard' or 'average' jaw anatomy.

The surface pattern analysis algorithm **125** operates by comparing the patterns on each segment of the 3D mesh scan **10** with the patterns on the corresponding segment of the single-jaw 3D reference model. It identifies similarities and differences between the patterns and uses these to determine the alignment between the segments.

For instance, if the patterns on a segment of the 3D mesh scan **10** (say, the front half) match closely with the patterns on the corresponding segment of the single-jaw 3D reference model when the former is rotated 15 degrees and translated 2 mm along the X-axis, the algorithm would conclude that this is the optimal alignment for that segment.

By matching and aligning the patterns on all the segments, the surface pattern analysis algorithm can align the entire 3D mesh scan **10** of the single jaw with the single-jaw 3D reference model, even though the initial orientation of the scan was arbitrary.

The determined alignments can also be used to ascertain the dimensions of the patient's jaw along the orthogonal axes of the 3D mesh scan **10,** by understanding how the scanned jaw's surface patterns match with those of the single-jaw 3D reference model.

### Sixth embodiment of the one or more analysis algorithms: color features extraction

In a sixth embodiment of step **120,** where the 3D mesh scan **10** is a 3D color scan, the one or more analysis algorithms include the extraction of color features **126** from the 3D color scan. The purpose of extracting **126** color features is to compare them with similar color features on a specific patient-oriented single-jaw 3D reference model and determine alignment transformations using a robust registration algorithm such as Iterative Closest Point (ICP) or Surface Matching. This process, in turn, helps in determining the dimensions of the 3D jaw object along the determined orthogonal axes of the 3D mesh scan **10** in the reference model space.

In simpler terms, the foregoing describes a sixth embodiment of step **120,** which is applicable when the 3D mesh scan **10** is a 3D color scan that does not just include structural information, but also color information.

In this case, the utilized analysis algorithms involve the extraction of color features **126** from the 3D color scan, based on established techniques such as the HSV (Hue, Saturation, Value) color model.

Color features refer to the various aspects of color present in the 3D scan, which could include things like hue (the type of color), saturation (the intensity of the color), and value (the lightness or darkness of the color). These color features can provide additional details about the scanned object, such as variations in tissue types or other characteristics that might be important in the analysis.

The main reason for extracting **126** color features is to compare them with similar color features on a specific patient-oriented single-jaw 3D reference model and ascertain alignment transformations using the aforementioned registration algorithm.

As an example, one may consider the 3D color scan as a digital representation of a patient's jaw, which includes not just structural but also color information. The specific patient-oriented single-jaw 3D reference model, in this case, would likewise have its own color features, segmented, and labeled accordingly.

After pre-processing steps which include noise reduction and smoothing using methods such as Gaussian smoothing, the extraction of color features **126** involves identifying and isolating the color information from the 3D color scan. These color features are then compared with the similar color features of the specific patient-oriented single-jaw 3D reference model using the aforementioned registration algorithm to determine any necessary transformations to align the two globally.

The color feature extraction algorithm **126** operates by identifying and isolating the color information from the 3D color scan. It then compares the color features from the scan with the color features from the specific patient-oriented single-jaw 3D reference model. This comparison involves measuring the differences and similarities in hue, saturation, and value between the scan and the specific patient-oriented single-jaw 3D reference model.

If, in an example, the color features from a portion of the 3D color scan match closely with the color features from a corresponding portion of the specific patient-oriented single-jaw 3D reference model when the former is rotated 15 degrees and translated 2 mm along the X-axis, and scaled by a factor of 0.98 (reducing the size by 2% along each dimension), the registration algorithm would determine that this is the optimal alignment for that portion. The 'scale factor of 0.98' refers to a scale transformation, which is a change in size without changing the shape. In this case, it means that the scanned object is reduced to 98% of its original size to achieve the best alignment with the reference model.

By matching and aligning the color features across the entire scan, the color feature extraction algorithm **126** can align the 3D color scan with the reference model, even though the initial orientation of the scan was arbitrary.

The determined alignments can also used to ascertain the dimensions of the patient's jaw along the orthogonal axes of the 3D color scan, by determining alignment transformations, which are changes in position, scale, or orientation that best align the 3D color scan with the specific patient-oriented single-jaw 3D reference model. The accuracy of these alignment transformations may be quantified using metrics such as Mean Squared Error (MSE) and Root Mean Squared Error (RMSE).

### Third step of the first aspect of the subject: assigning dimensions to axes using know proportion of anatomy

In step **130,** the computer-implemented method **100** assigns the determined dimensions to the X, Y, and Z axes. This assignment process relies on the known proportions of jaw anatomy relative to the determined orthogonal axes of the 3D mesh scan **10.** This knowledge is garnered from extensive anatomical studies and reference ranges for dimensions and ratios that provide insight into the typical size and shape of jaws.

In other words, step **130** of the computer-implemented method **100** involves assigning the determined dimensions of a 3D mesh scan **10** of a jaw to the X, Y, and Z axes of a CAD system, with an understanding of the average anatomical proportions of the jaw.

This assignment process is crucial for properly aligning and displaying the 3D mesh scan **10** within the CAD system.

The process relies on the known proportions of jaw anatomy, meaning it uses established knowledge about the typical size and shape of jaws to decide how to assign the dimensions of the scan to the axes. This knowledge is based on a comprehensive set of data obtained from anatomical studies that provide reference ranges for jaw dimensions and ratios.

For instance, it is known that for some upper jaws, the 3D mesh scan **10** shows a jaw that is longer than it is wide. In that case, the longest dimension might be assigned to the Z-axis, the shorter dimension to the X-axis, and the depth of the jaw to the Y-axis.

However, it's important to note that this method is adaptable to various anatomical variations. For instance, when dealing with lower jaws or children's jaws, which have their own unique proportions and growth patterns, the method incorporates the specific anatomical knowledge about these variations. This flexibility ensures the method's applicability across a wide range of jaw types and sizes, allowing for accurate modeling and analysis irrespective of these variations.

### An embodiment of the third step of the first aspect of the subject

In an embodiment of step **130,** the longest determined dimension is assigned to the Z axis. The medium determined dimension is assigned to the Y-axis, and the shortest determined dimension to the X-axis. 3D mesh scan **10**

In practice, the embodiment of step **130** in the computer-implemented method **100** refers to a specific way of assigning the determined dimensions of a 3D mesh scan **10** of a jaw to the X, Y, and Z axes of a CAD system.

In this particular embodiment, the longest determined dimension is assigned to the Z-axis, the medium determined dimension is assigned to the Y-axis, and the shortest determined dimension is assigned to the X-axis.

For example, if a 3D mesh scan **10** of a jaw had dimensions of 10 units length, 8 units width, and 6 units depth, this embodiment would assign the length to the Z-axis, the width to the Y-axis, and the depth to the X-axis.

### Fourth step of the first aspect of the subject: transforming 3D mesh scan 10 to align axes

Following this, step **140** of the computer-implemented method **100** involves transforming the 3D mesh scan **10.** This transformation process applies one or more translations and/or rotations. The objective is to align the determined principal axes with the CAD coordinate system X, Y, and Z axes. Additionally, this step also aims to automatically center the 3D mesh scan **10** within the CAD coordinate system.

In practice, step **140** of the computer-implemented method **100** entails transforming the 3D mesh scan **10.**

Transformation in this context refers to the process of modifying the position and/or orientation of the 3D mesh scan **10** in the CAD coordinate system.

In practice, this transformation involves one or more translations and/or rotations.

The main goal is to align the determined principal axes with the X, Y, and Z axes of the CAD coordinate system.

Furthermore, this step also seeks to automatically center the 3D mesh scan **10** within the CAD coordinate system.

As an example, one may envision the 3D mesh scan **10** as a digital model of a patient's jaw, represented in a 3D coordinate system with its own X, Y, and Z axes. In contrast, the CAD coordinate system is a 'standard' coordinate system used in the CAD software.

During step **140,** the 3D mesh scan **10** is transformed - it may be shifted (translated) and/or turned (rotated) - in order to align its principal axes with the X, Y, and Z axes of the CAD coordinate system.

For instance, as explained above in the embodiment of the third step of the first aspect of the subject, the longest dimension of the jaw, which was assigned to the Y-axis, should align with the Y axis of the CAD system, and so on for the X and Z axes.

This alignment ensures that the 3D mesh scan **10** is oriented correctly within the CAD system, which is crucial for accurate design and manufacturing processes.

In addition, step **140** centers the 3D mesh scan **10** within the CAD coordinate system, ensuring that the model is properly positioned for subsequent design and manufacturing processes in the CAD software.

Centering the model ensures that it is positioned optimally within the CAD workspace, which can facilitate subsequent design and manufacturing processes.

### A first embodiment of the fourth step of the first aspect of the subject

In a first embodiment of step **140,** the transformation process of the 3D mesh scan **10** includes applying **141** translations along the assigned X, Y, and/or Z principal axes. The purpose of these translations **141** is to position the 3D mesh scan **10** at a predetermined target location within the CAD coordinate system.

In other words, the foregoing describes a first embodiment of step **140,** in which the transformation process of the 3D mesh scan **10** involves applying **141** translations along the assigned X, Y, and/or Z principal axes.

Translations are a type of transformation that moves the 3D mesh scan **10** from one location to another without changing its orientation or size.

Applying **141** these translations is intended to position the 3D mesh scan **10** at a specific, predetermined target location within the CAD coordinate system.

This target location is not arbitrary but is predetermined prior to the transformations being applied. In an example, the predetermined target location is the center of the CAD coordinate system, i.e. (0,0,0). However, the predetermined target location could be located elsewhere in the CAD coordinate system.

As an example, one may consider the 3D mesh scan **10** as a digital representation of a patient's jaw, and translations **141** as movements applied to this digital model.

These translations **141** move the model along the X, Y, and Z axes, which have been oriented using the dimensions of the 3D jaw object determined from the 3D mesh scan **10.**

The target location for these translations is predetermined, meaning it is chosen before the translations **141** are applied.

Through these translations **141,** the 3D mesh scan **10** is effectively moved to the target location in the CAD coordinate system.

In an example of the first embodiment of step **140,** this process further includes:
- calculating **1411** an Xcenter, Ycenter, and Zcenter, which represent the center point of the 3D mesh scan **10** along each axis, using the vertex coordinate values,
- calculating **1412** a deltaX, which is the difference between the Xcenter of the mesh and the X-coordinate of the predetermined target position,
- calculating **1413** a deltaY, which is the difference between the Ycenter of the mesh and the Y-coordinate of the predetermined target position,
- calculating **1414** a deltaZ, which is the minimum Z value of the mesh vertices, and
- translating **1415** all X vertex coordinates by deltaX, all Y vertex coordinates by deltaY, and all Z vertex coordinates by deltaZ, which aligns the center of the 3D mesh scan **10** with the predetermined target position and shifts any negative Z coordinate values to be zero or positive, such that the Z-axis is oriented positively with all positive Z values.

In other words, the foregoing describes an example of the first embodiment of step **140** where the process involves several calculations and transformations.

Firstly, calculating **1411** an Xcenter, Ycenter, and Zcenter, which symbolize the central point of the 3D mesh scan **10** on each axis, using the vertex coordinate values. These center points are computed using the formula for the centroid of a set of points, which is the average of the coordinates of all the points.

Secondly, calculating **1412** a deltaX, which represents the difference between the Xcenter of the mesh and the X-coordinate of the predetermined target position.

Similarly, calculating **1413** a deltaY, which signifies the difference between the Ycenter of the mesh and the Y -coordinate of the predetermined target position.

Then, calculating **1414** a deltaZ, which is the minimum Z value of the mesh vertices.

Finally, translating **1415** all X vertex coordinates by deltaX, all Y vertex coordinates by deltaY, and all Z vertex coordinates by deltaZ, aligns the center of the 3D mesh scan **10** with the predetermined target position and shifts any negative Z coordinate values to be zero or positive, such that the Z-axis is oriented positively with all positive Z values such that the whole jaw will be on the upper side of the plane. This global alignment ensures a consistent starting point for any subsequent local refinements.

For instance, if the minimum Z value calculated is -5, then translating by +5 would shift all Z coordinates up by 5 units, resulting in all positive Z values, or at least zero. This orients the Z axis positively.

This way, it is going to be easier to work with the model in the CAD system since the jaw will be seen from the front.

The frontal view is essential as it provides a clear and accurate depiction of the object's details, dimensions, and features as seen from the front.

### A second embodiment of the fourth step of the first aspect of the subject

In a second embodiment of step **140,** transforming the 3D mesh scan **10** further involves applying rotations **142** around the assigned X, Y, and/or Z axes of the CAD coordinate system. The purpose of these rotations **142** is to normalize the orientation of the 3D mesh scan with respect to an axis of the CAD system.

In other words, the foregoing describes a second embodiment of step **140,** in which the transformation process of the 3D mesh scan **10** involves applying rotations **142** around the assigned X, Y, and/or Z axes of the CAD coordinate system.

Applying **142** these rotations alters the orientation of the 3D mesh scan **10** within the CAD coordinate system while keeping its position and size unchanged. Said differently, these rotations modify the direction the 3D mesh scan **10** is facing within the CAD coordinate system, without altering its physical dimensions or its position within the CAD system. 3D mesh scan **10**

The goal of performing **142** these rotations is to normalize the orientation of the 3D mesh scan with respect to an axis of the CAD system.

In an example of the first embodiment and/or second embodiment of step **140,** the process of transforming the 3D mesh scan **10** includes:
- projecting **1421** the 3D mesh scan **10** onto the 2D XY plane,
- calculating **1422** a delta angle, the delta angle being equal to the difference between a first angle α1 formed between the lower left corner point **11** of the 2D projected scan and a predetermined target location on the Y-axis of the CAD coordinate system, and a second angle α2 formed between the lower right corner point **12** of the 2D projected scan and the predetermined target location on the Y-axis,
- until the calculated delta angle is at or beyond a predetermined threshold angle:
   - applying **1423** a Y-axis rotation to the 3D mesh scan **10** using the calculated delta angle,
   - analyzing **1424** the rotated 3D mesh scan **10** using one or more analysis algorithms to monitor the progress of its alignment with the CAD system's axes and confirm its positioning within the coordinate system,
   - projecting **1425** the rotated 3D mesh scan **10** onto the 2D XY plane, and
   - recalculating **1426** a delta angle between the lower left corner point **11** and lower right corner point **12** of the projected rotated scan relative to the Y-axis of the CAD coordinate system.

In other words, the foregoing describes an example of the first and/or second embodiment(s) of step **140** where the process of transforming the 3D mesh scan **10** involves a series of actions for normalizing the orientation of the 3D mesh scan with respect to the frontal view (i.e., the Y-axis) in the 2D XY plane.

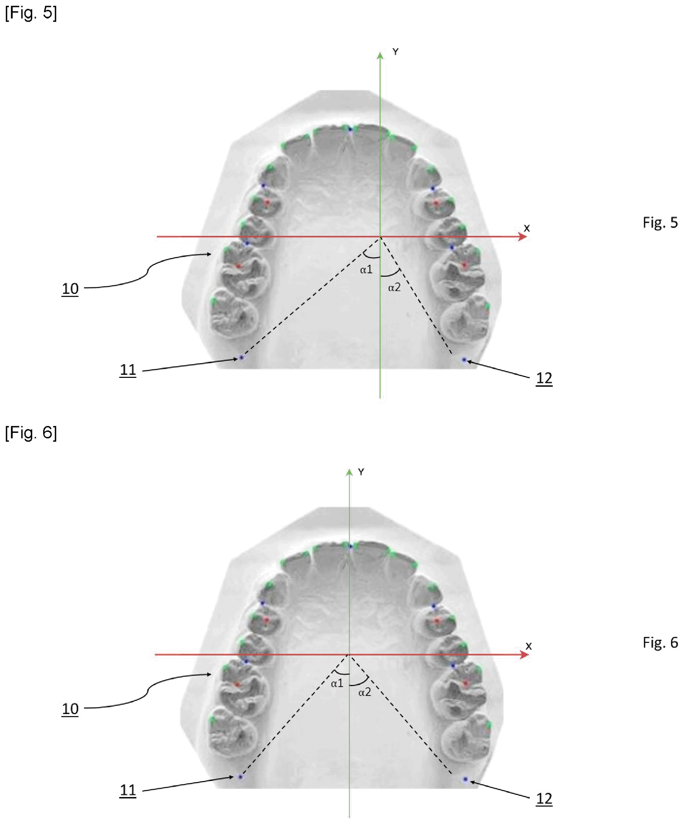

Figures 4, 5, 6 illustrate different views of the 3D mesh scan projected in the 2D XY plane and rotated according to the example of the first embodiment and/or second embodiment of step **140.**

At first, as illustrated in figure 4, projecting **1421** the 3D mesh scan **10** onto the 2D XY plane, simplify its three-dimensional structure into a two-dimensional representation. This could be done using a standard method for 3D to 2D projection such as orthographic projection where the Z-axis depth is ignored and only X and Y coordinate values are used.

Subsequently, as illustrated in figures 4, 5 and 6, calculating **1422** a delta angle which represents the difference in angle between the lower left corner point **11** and lower right corner point **12** of the 2D projected scan relative to the Y-axis of the CAD coordinate system. In that case, it is assumed that the Y-axis corresponds to the longest dimension 3D mesh scan **10.**

As used herein, the term 'lower left corner point' refers to the point located at the farthest left corner on the lower half (below the X-axis) of the 2D projected rotated scan, when observed from the perspective of the Y-axis of the CAD (Computer Aided Design) coordinate system.

Similarly, the term 'lower right corner point' refers to the point located at the farthest right corner on the lower half (below the X-axis) of the 2D projected rotated scan, again when observed from the perspective of the Y-axis of the CAD (Computer Aided Design) coordinate system.

In practice, as illustrated in figures 4, 5 and 6, there is formed a first angle α1 between the lower left corner point **11** of the 2D projected scan and a predetermined target location on the Y-axis (e.g., the center of the CAD coordinate system). Then, there is formed a second angle α2 between the lower right corner point **12** of the 2D projected scan and the predetermined target location on the Y-axis. Finally, the delta angle will be calculated as corresponding to the difference between the first angle α1 and the second angle α2.

The process of transforming the 3D mesh scan **10** then enters a loop that repeats until the calculated delta angle reaches or exceeds a predetermined threshold angle.

In an example, the predetermined threshold angle is between 1° and 5°, preferably between 1° and 3°, in particular, about 2°.

In each iteration of the loop, a Y-axis rotation is applied **1423** to the 3D mesh scan **10** using the calculated delta angle. In that case, it is assumed that the Y-axis corresponds to the longest dimension 3D mesh scan **10.**

Following this, the rotated 3D mesh scan **10** is analyzed **1424** using one or more analysis algorithms to monitor the progress of its alignment with the CAD system's axes and confirm its positioning within the coordinate system.

The loop continues with projecting **1425** the rotated 3D mesh scan **10** onto the 2D XY plane again using again orthographic projection or another suitable 3D to 2D projection method, and recalculating **1426** a delta angle between the lower left corner point **11** and lower right corner point **12** of the projected rotated scan relative to the Y-axis of the CAD coordinate system.

### Fifth step of the first aspect of the subject: displaying aligned 3D mesh scan 10

Finally, the computer-implemented method **100** displays **150** the transformed 3D mesh scan **10** of the single jaw in the CAD system. This concludes the steps of the computer-implemented method **100.**

In practice, this means that, at the end of the computer-implemented method **100,** the transformed 3D mesh scan **10** of the single jaw, which has been rotated and oriented correctly in the CAD coordinate system, is displayed **150** in the CAD system.

Before the final display, the 3D mesh scan undergoes a process of rendering. This involves applying shaders and textures to the 3D model to make it visually realistic and comprehensible. Shaders are used to calculate the color of each pixel based on its material and lighting, while textures are bitmap images mapped onto the surface of the 3D model to give it color and detail.

Additionally, post-processing techniques such as smoothing are applied to enhance the visual appeal and readability of the 3D model. Smoothing helps to reduce noise and irregularities in the 3D mesh scan, leading to a cleaner and more accurate representation.

This display **150** in the CAD system signals the end of the computer-implemented method **100.** It means that the transformed 3D mesh scan **10** is ready for the next steps in the CAD process, such as designing a dental prosthetic using the displayed 3D model.

Furthermore, this display within the CAD system is not just a static visualization. It's a fully interactive 3D model that users can inspect, manipulate, and utilize for further processes. Users have the ability to pan, zoom, and rotate the 3D model to inspect it from various angles and distances. These user interaction modes enhance the usability of the 3D model and allow for more detailed inspection and manipulation.

Through the application of shaders, textures, and post-processing techniques, along with the inclusion of user interaction modes, the final display of the 3D mesh scan in the CAD system is a highly detailed, realistic, and interactive 3D model ready for further CAD processes, such as designing and manufacturing dental prosthetics.

### Second aspect of the subject application: a computer-readable medium

The subject application also relates to a computer-readable medium having stored thereon computer instructions which when executed, by a processor, perform the computer-implemented method **100** as described above.

Depending on the system's requirements, the computer-readable medium could be a high-capacity storage medium such as a 1TB hard disk drive (HDD), a quick-access solid-state drive (SSD), or even an optical disc for portable data storage.

### Third aspect of the subject application: a CAD System

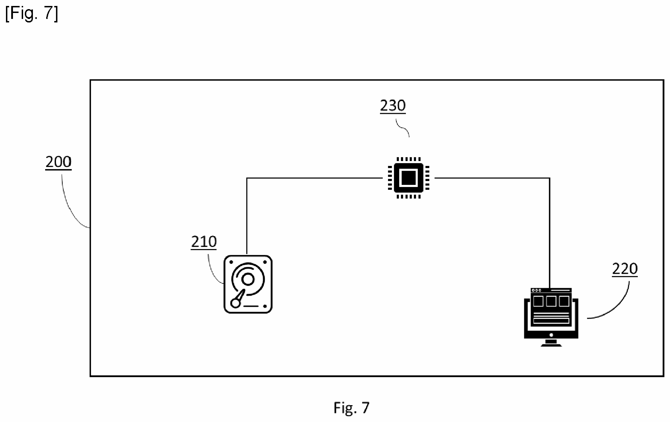

As illustrated in figure 7, the subject application also relates to a 3D Computer-Aided Design, CAD, system **200,** which comprises several components.

The first component is one or more memories **210.**

These memories **210** are responsible for storing a 3D mesh scan **10** that represents the full anatomical form of a jaw and executable instructions for performing the computer-implemented method **100.**

These memories 210, which could range in size, such as 16GB for optimal performance.

The CAD system **200** also includes one or more user interfaces **220.**

These interfaces could be designed for various platforms like desktop, web, or mobile, depending on the user's needs and accessibility.

In addition to the main components, the CAD system might also include a high-performance graphics card for efficient 3D rendering, especially important in the context of a 3D mesh scan **10.**

The last main component is one or more processors **230,** such as a 3.5 GHz quad-core processor, for instance.

These processors **230** are coupled with the memory **210** and the user interface **220,** and they're configured for executing the executable instructions stored in the memory **210.**

Moreover, the CAD system would ideally have network or internet connectivity to access any online resources or system aspects, facilitating greater flexibility and remote access capabilities.

The description of the subject application has been presented for purposes of illustration and description but is not intended to be exhaustive or limited to the application in the form disclosed. The embodiments were chosen and described to better explain the principles of the application and the practical application, and to enable the skilled person to understand the application for various embodiments with various modifications as are suited to the particular use contemplated.

## Claims

1. A computer-implemented method **(100)**for automatically centering and aligning a 3D mesh scan **(10)** of a single jaw in a CAD system having an X, Y, Z CAD coordinate system, the computer-implemented method comprising the steps of,
- importing **(110)** a 3D mesh scan **(10)** representing the full anatomical form of a single jaw into the CAD system, wherein the initial orientation of the 3D mesh scan **(10)** is arbitrary with respect to the X, Y, Z CAD coordinate system, and wherein the arbitrary orientation results from variability in scan acquisition or data file saving,
- analyzing **(120)** the geometric properties of the 3D mesh scan using one or more analysis algorithms to determine its principal dimensions along orthogonal axes associated with the 3D mesh scan **(10),**
- assigning **(130)** the determined dimensions to the X, Y, and Z axes using known proportions of jaw anatomy relative to the determined orthogonal axes of the 3D mesh scan **(10),**
- transforming **(140)** the 3D mesh scan **(10)** by applying one or more translations and/or rotations to align the determined principal axes with the CAD coordinate system X, Y, and/or Z axes and automatically center the 3D mesh scan **(10)** within the CAD coordinate system, and
- displaying **(150)** the transformed 3D mesh scan **(10)** of the single jaw in the CAD system.

2. The computer-implemented method **(100)** of claim 1, wherein the one or more analysis algorithms comprises using **(121)** bounding box analysis to determine minimum and maximum vertex values along the determined orthogonal axes of the 3D mesh scan **(10)** and determining the dimensions of the 3D jaw object along the determined orthogonal axes of the 3D mesh scan **(10).**

3. The computer-implemented method **(100)** of any one of claims 1 to 2, wherein the one or more analysis algorithms comprises using **(122)** principal component analysis, PCA, to calculate eigenvectors mapped to the determined orthogonal axes of the 3D mesh scan **(10)** and determining the dimensions of the 3D jaw object along the determined orthogonal axes of the 3D mesh scan **(10).**

4. The computer-implemented method **(100)** of any one of claims 1 to 3, wherein the one or more analysis algorithms comprises using **(123)** feature matching with a single-jaw 3D reference model to compare anatomical features of the 3D mesh scan **(10)** to corresponding anatomical features on the single-jaw 3D reference model and determine corresponding dimensions along the determined orthogonal axes of the 3D mesh scan **(10).**

5. The computer-implemented method **(100)** of any one of claims 1 to 4, wherein the one or more analysis algorithms comprises using **(124)** iterative closest point, ICP, with a single-jaw 3D reference model to minimize distances between vertices and surfaces of the 3D mesh scan **(10)** and the single-jaw 3D reference model and determining the dimensions of the 3D jaw object along the determined orthogonal axes of the 3D mesh scan **(10).**

6. The computer-implemented method **(100)** of any one of claims 1 to 5, wherein the one or more analysis algorithms comprises analyzing **(125)** surface patterns across segmented regions of the 3D mesh scan **(10)** and corresponding segmented regions of a single-jaw 3D reference model to match patterns, determine alignments between the regions, and determining the dimensions of the 3D jaw object along the determined orthogonal axes of the 3D mesh scan **(10).**

7. The computer-implemented method **(100)** of any one of claims 1 to 6, wherein the 3D mesh scan **(10)** is a 3D color scan, and the one or more analysis algorithms comprises extracting **(126)** color features from the 3D color scan to compare with similar color features on a specific patient-oriented single-jaw 3D reference model, and determining alignment transformations and the dimensions of the 3D jaw object along the determined orthogonal axes of the 3D mesh scan **(10).**

8. The computer-implemented method **(100)** of claims 1 to 7, wherein the longest determined dimension is assigned to the Z-axis, the medium determined dimension is assigned to the Y-axis, and the shortest determined dimension is assigned to the X-axis.

9. The computer-implemented method **(100)** of claims 1 to 8, wherein transforming **(140)** the 3D mesh scan **(10)** comprises applying **(141)** translations along the assigned X, Y, and/or Z principal axes to position the 3D mesh scan **(10)** at a predetermined target location within the CAD coordinate system.

10. The computer-implemented method **(100)** of claim 9, further comprising:
- calculating **(1411)** an Xcenter, Ycenter, and Zcenter representing the center point of the 3D mesh scan **(10)** along each axis using vertex coordinate values,
- calculating **(1412)** a deltaX as the difference between the Xcenter of the mesh and the X-coordinate of the predetermined target position,
- calculating **(1413)** a deltaY as the difference between the Ycenter of the mesh and the Y-coordinate of the predetermined target position,
- calculating **(1414)** a deltaZ as the minimum Z value of the mesh vertices, and
- translating **(1415)** all X vertex coordinates by deltaX, all Y vertex coordinates by deltaY, and all Z vertex coordinates by deltaZ, thereby aligning the center of the 3D mesh scan **(10)** with the predetermined target position and shifting any negative Z coordinate values to be zero or positive, such that the Z-axis is oriented positively with all positive Z values.

11. The computer-implemented method **(100)** of claims 1 to 10, wherein transforming **(140)** the 3D mesh scan **(10)** further comprises applying **(142)** rotations around the assigned X, Y, and/or Z axes of the CAD coordinate system to normalize the orientation of the 3D mesh scan with respect to an axis of the CAD system.

12. The computer-implemented method **(100)** of claim 10 or claim 11 when claim 11 depends on claim 10, wherein transforming **(140)** the 3D mesh scan **(10)** comprises:
- projecting **(1421)** the 3D mesh scan **(10)** onto the 2D XY plane,
- calculating **(1422)** a delta angle, the delta angle being equal to the difference between a first angle α1 formed between the lower left corner point **(11)** of the 2D projected scan and a predetermined target location on the Y-axis of the CAD coordinate system, and a second angle α2 formed between the lower right corner point **(12)** of the 2D projected scan and the predetermined target location on the Y-axis,
- until the calculated delta angle is at or beyond a predetermined threshold angle,
- applying **(1423)** a Y-axis rotation to the 3D mesh scan **(10)** using the calculated delta angle,
- analyzing **(1424)** the rotated 3D mesh scan **(10)** using one or more analysis algorithms to monitor the progress of its alignment with the CAD system's axes and confirm its positioning within the coordinate system,
- projecting **(1425)** the rotated 3D mesh scan **(10)** onto the 2D XY plane, and
- recalculating **(1426)** a delta angle between the lower left corner point **(11)** and lower right corner point **(12)** of the projected rotated scan relative to the Y-axis of the CAD coordinate system.

13. A computer-readable medium having stored thereon computer instructions which when executed, by a processor, perform a computer-implemented method **(100)** according to any one of claims 1 to 12.

14. A 3D Computer-Aided Design, CAD, system **(200)** comprising,
- one or more memories **(210)** for storing,
- a 3D mesh scan **(10)** representing the full anatomical form of a single jaw, and
- executable instructions for performing the computer-implemented method **(100)** of any one of claims 1 to 12,
- one or more user interfaces **(220),**
- one or more processors **(230)** coupled with the memory and the user interface, and configured for executing the executable instructions.

## Patentansprüche

1. Computerimplementiertes Verfahren (100) zum automatischen Zentrieren und Ausrichten eines 3D-Netzscans (10) eines einzelnen Kiefers in einem CAD-System mit einem XYZ-CAD-Koordinatensystem, wobei das computerimplementierte Verfahren die folgenden Schritte umfasst,
- Importieren (110) eines 3D-Netzscans (10), der die vollständige anatomische Form eines einzelnen Kiefers repräsentiert, in das CAD-System, wobei die anfängliche Orientierung des 3D-Netzscans (10) mit Bezug auf das XYZ-CAD-Koordinatensystem willkürlich ist und wobei die willkürliche Orientierung aus einer Variabilität der Scanerfassung oder des Speicherns einer Datendatei resultiert,
- Analysieren (120) der geometrischen Eigenschaften des 3D-Netzscans unter Verwendung von einem oder mehreren Analysealgorithmen, um die Hauptabmessungen entlang orthogonalen Achsen zu bestimmen, die mit dem 3D-Netzscan (10) verknüpft sind,
- Zuweisen (130) der bestimmten Abmessungen zu den Achsen X, Y und Z unter Verwendung von bekannten Proportionen einer Kieferanatomie relativ zu den bestimmten orthogonalen Achsen des 3D-Netzscans (10),
- Transformieren (140) des 3D-Netzscans (10) durch Anwenden von einer oder mehreren Translationen und/oder Rotationen, um die bestimmten Hauptachsen auf die Achsen X, Y und/oder Z des CAD-Koordinatensystems auszurichten und den 3D-Netzscan (10) im CAD-Koordinatensystem automatisch zu zentrieren, und
- Anzeigen (150) des transformierten 3D-Netzscans (10) des einzelnen Kiefers im CAD-System.

2. Computerimplementiertes Verfahren (100) nach Anspruch 1, wobei der eine oder die mehreren Analysealgorithmen das Verwenden (121) einer Begrenzungsboxanalyse, um einen minimalen und einen maximalen Scheitelpunktwert entlang den bestimmten orthogonalen Achsen des 3D-Netzscans (10) zu bestimmen, und das Bestimmen der Abmessungen des 3D-Kieferobjekts entlang den bestimmten orthogonalen Achsen des 3D-Netzscans (10) umfasst.

3. Computerimplementiertes Verfahren (100) nach einem der Ansprüche 1 bis 2, wobei der eine oder die mehreren Analysealgorithmen das Verwenden (122) einer Hauptkomponentenanalyse, PCA, um Eigenvektoren zu berechnen, die den bestimmten orthogonalen Achsen des 3D-Netzscans (10) zugeordnet sind, und das Bestimmen der Abmessungen des 3D-Kieferobjekts entlang den bestimmten orthogonalen Achsen des 3D-Netzscans (10) umfasst.

4. Computerimplementiertes Verfahren (100) nach einem der Ansprüche 1 bis 3, wobei der eine oder die mehreren Analysealgorithmen das Verwenden (123) eines Merkmalsabgleichs mit einem 3D-Einzelkieferreferenzmodell umfasst, um anatomische Merkmale des 3D-Netzscans (10) mit entsprechenden anatomischen Merkmalen am 3D-Einzelkieferreferenzmodell zu vergleichen und entsprechende Abmessungen entlang den bestimmten orthogonalen Achsen des 3D-Netzscans (10) zu bestimmen.

5. Computerimplementiertes Verfahren (100) nach einem der Ansprüche 1 bis 4, wobei der eine oder die mehreren Analysealgorithmen das Verwenden (124) eines iterativen nächsten Punktes, ICP, mit einem 3D-Einzelkieferreferenzmodell, um Abstände zwischen Scheitelpunkten und Oberflächen des 3D-Netzscans (10) und dem 3D-Einzelkieferreferenzmodell zu minimieren, und das Bestimmen der Abmessungen des 3D-Kieferobjekts entlang den bestimmten orthogonalen Achsen des 3D-Netzscans (10) umfasst.

6. Computerimplementiertes Verfahren (100) nach einem der Ansprüche 1 bis 5, wobei der eine oder die mehreren Analysealgorithmen das Analysieren (125) von Oberflächenmustern über segmentierte Regionen des 3D-Netzscans (10) und entsprechende segmentierte Regionen eines 3D-Einzelkieferreferenzmodell, um Muster abzugleichen, Ausrichtungen zwischen den Regionen zu bestimmen, und das Bestimmen der Abmessungen des 3D-Kieferobjekts entlang den bestimmten orthogonalen Achsen des 3D-Netzscans (10) umfasst.

7. Computerimplementiertes Verfahren (100) nach einem der Ansprüche 1 bis 6, wobei der 3D-Netzscan (10) ein 3D-Farbscan ist und der eine oder die mehreren Analysealgorithmen das Extrahieren (126) von Farbmerkmalen aus dem 3D-Farbscan, um mit ähnlichen Farbmerkmalen eines spezifischen an einem Patienten orientierten 3D-Einzelkieferreferenzmodells zu vergleichen, und das Bestimmen von Ausrichtungstransformationen und der Abmessungen des 3D-Kieferobjekts entlang den bestimmten orthogonalen Achsen des 3D-Netzscans (10) umfasst.

8. Computerimplementiertes Verfahren (100) nach Anspruch 1 bis 7, wobei die längste bestimmte Abmessung der Z-Achse zugewiesen ist, die mittlere bestimmte Abmessung der Y-Achse zugewiesen ist und die kürzeste bestimmte Abmessung der X-Achse zugewiesen ist.

9. Computerimplementiertes Verfahren (100) nach Anspruch 1 bis 8, wobei das Transformieren (140) des 3D-Netzscans (10) das Anwenden (141) von Translationen entlang den zugewiesenen Hauptachsen X, Y und/oder Z umfasst, um den 3D-Netzscan (10) an einem vorbestimmten Zielort innerhalb des CAD-Koordinatensystems zu positionieren.

10. Computerimplementiertes Verfahren (100) nach Anspruch 9, das ferner Folgendes umfasst:
- Berechnen (1411) eines Xcenter, Ycenter und eines Zcenter, die den Mittelpunkt des 3D-Netzscans (10) repräsentieren, entlang jeder Achse unter Verwendung von Scheitelpunktkoordinatenwerten,
- Berechnen (1412) eines deltaX als die Differenz zwischen dem Xcenter des Netzes und der X-Koordinate der vorbestimmten Zielposition,
- Berechnen (1413) eines deltaY als die Differenz zwischen dem Ycenter des Netzes und der Y-Koordinate der vorbestimmten Zielposition,
- Berechnen (1414) eines deltaZ als den Z-Mindestwert der Netzscheitelpunkte und
- Translatieren (1415) von allen X-Scheitelpunktkoordinaten durch deltaX, allen Y-Scheitelpunktkoordinaten durch deltaY und allen Z-Scheitelpunktkoordinaten durch deltaZ, dadurch Ausrichten des Mittelpunkts des 3D-Netzscans (10) auf die vorbestimmte Zielposition und Verschieben von negativen Z-Koordinatenwerten zu null oder positiv, derart, dass die Z-Achse auf alle positiven Z-Werte positiv orientiert ist.

11. Computerimplementiertes Verfahren (100) nach Anspruch 1 bis 10, wobei das Transformieren (140) des 3D-Netzscans (10) ferner das Anwenden (142) von Rotationen um die zugewiesene X-, Y- und/oder Z-Achse des CAD-Koordinatensystems umfasst, um die Orientierung des 3D-Netzscans mit Bezug auf eine Achse des CAD-Systems zu normalisieren.

12. Computerimplementiertes Verfahren (100) nach Anspruch 10 oder Anspruch 11, sofern Anspruch 11 von Anspruch 10 abhängig ist, wobei das Transformieren (140) des 3D-Netzscans (10) Folgendes umfasst:
- Projizieren (1421) des 3D-Netzscans (10) auf die 2D-XY-Ebene,
- Berechnen (1422) eines Deltawinkels, wobei der Deltawinkel gleich der Differenz zwischen einem ersten Winkel α1, der zwischen dem unteren linken Eckpunkt (11) des projizierten 2D-Scans und einem vorbestimmten Zielort auf der Y-Achse des CAD-Koordinatensystems gebildet ist, und einem zweiten Winkel α2 ist, der zwischen dem unteren rechten Eckpunkt (12) des projizierten 2D-Scans und dem vorbestimmten Zielort auf der Y-Achse gebildet ist,
- bis der berechnete Deltawinkel bei oder über einem vorbestimmten Winkelschwellwert liegt,
- Anwenden (1423) einer Y-Achsenrotation unter Verwendung des berechneten Deltawinkels auf den 3D-Netzscan (10),
- Analysieren (1424) des routinierten 3D-Netzscans (10) unter Verwendung von einem oder mehreren Analysealgorithmen, um den Fortschritt seiner Ausrichtung auf die Achsen des CAD-Systems zu überwachen und seine Positionierung im Koordinatensystem zu bestätigen,
- Projizieren (1425) des rotierten 3D-Netzscans (10) auf die 2D-XY-Ebene und
- erneutes Berechnen (1426) eines Deltawinkels zwischen dem unteren linken Eckpunkt (11) und dem unteren rechten Eckpunkt (12) des projizierten rotierten Scans relativ zur Y-Achse des CAD-Koordinatensystems.

13. Computerlesbares Medium, auf dem Computeranweisungen gespeichert sind, die, wenn sie von einem Prozessor ausgeführt werden, ein computerimplementiertes Verfahren (100) gemäß einem der Ansprüche 1 bis 12 durchführen.

14. Computergestütztes Konstruktions(CAD)-3D-System (200), das Folgendes umfasst,
- einen oder mehrere Speicher (210) zum Speichern von Folgendem,
- einem 3D-Netzscan (10), der die vollständige anatomische Form eines einzelnen Kiefers repräsentiert, und
- ausführbaren Anweisungen zum Durchführen des computerimplementierten Verfahrens (100) nach einem der Ansprüche 1 bis 12,
- einer oder mehreren Benutzerschnittstellen (220),
- einen oder mehrere Prozessoren (230), die an den Speicher und die Benutzerschnittstelle gekoppelt und zum Ausführen der ausführbaren Anweisungen ausgelegt sind.

## Revendications

1. Procédé mis en œuvre par ordinateur (100) permettant de centrer et d'aligner automatiquement un balayage en maillage 3D (10) d'une mâchoire unique dans un système de CAO ayant un système de coordonnées CAO X, Y, Z, le procédé mis en œuvre par ordinateur comprenant les étapes suivantes :
- importer (110) un balayage en maillage 3D (10) représentant la forme anatomique complète d'une mâchoire unique dans le système de CAO, dans lequel l'orientation initiale du balayage en maillage 3D (10) est arbitraire par rapport au système de coordonnées CAO X, Y, Z, et dans lequel l'orientation est arbitraire en raison de la variabilité de l'acquisition par balayage ou de la sauvegarde du fichier de données,
- analyser (120) les propriétés géométriques du balayage en maillage 3D en utilisant un ou plusieurs algorithmes d'analyse pour déterminer ses dimensions principales le long d'axes orthogonaux associés au balayage en maillage 3D (10),
- attribuer (130) les dimensions déterminées aux axes X, Y et Z en utilisant des proportions connues d'anatomie de mâchoire par rapport aux axes orthogonaux déterminés du balayage en maillage 3D (10),
- transformer (140) le balayage en maillage 3D (10) en appliquant une ou plusieurs translations et/ou rotations pour aligner les axes principaux déterminés avec les axes X, Y et/ou Z du système de coordonnées CAO et centrer automatiquement le balayage en maillage 3D (10) dans le système de coordonnées CAO, et
- afficher (150) le balayage en maillage 3D (10) transformé de la mâchoire unique dans le système de CAO.

2. Procédé mis en œuvre par ordinateur (100) selon la revendication 1, dans lequel les un ou plusieurs algorithmes d'analyse comprennent l'utilisation (121) d'une analyse de boîte englobante pour déterminer des valeurs de sommet minimales et maximales le long des axes orthogonaux déterminés du balayage en maillage 3D (10) et déterminer les dimensions de l'objet-mâchoire 3D le long des axes orthogonaux déterminés du balayage en maillage 3D (10).

3. Procédé mis en œuvre par ordinateur (100) selon l'une quelconque des revendications 1 et 2, dans lequel les un ou plusieurs algorithmes d'analyse comprennent l'utilisation (122) d'une analyse de composante principale, PCA, pour calculer des vecteurs propres mappés aux axes orthogonaux déterminés du balayage en maillage 3D (10) et déterminer les dimensions de l'objet-mâchoire 3D le long des axes orthogonaux déterminés du balayage en maillage 3D (10).

4. Procédé mis en œuvre par ordinateur (100) selon l'une quelconque des revendications 1 à 3, dans lequel les un ou plusieurs algorithmes d'analyse comprennent l'utilisation (123) d'une mise en concordance de caractéristiques avec un modèle de référence 3D de mâchoire unique pour comparer des caractéristiques anatomiques du balayage en maillage 3D (10) avec des caractéristiques anatomiques correspondantes sur le modèle de référence 3D de mâchoire unique et déterminer des dimensions correspondantes le long des axes orthogonaux déterminés du balayage en maillage 3D (10).

5. Procédé mis en œuvre par ordinateur (100) selon l'une quelconque des revendications 1 à 4, dans lequel les un ou plusieurs algorithmes d'analyse comprennent l'utilisation (124) du point le plus proche itératif, ICP, avec un modèle de référence 3D de mâchoire unique pour minimiser les distances entre les sommets et surfaces du balayage en maillage 3D (10) et le modèle de référence 3D de mâchoire unique et déterminer les dimensions de l'objet-mâchoire 3D le long des axes orthogonaux déterminés du balayage en maillage 3D (10).

6. Procédé mis en œuvre par ordinateur (100) selon l'une quelconque des revendications 1 à 5, dans lequel les un ou plusieurs algorithmes d'analyse comprennent l'analyse (125) de motifs de surface sur des régions segmentées du balayage en maillage 3D (10) et sur des régions segmentées correspondantes d'un modèle de référence 3D de mâchoire unique pour faire concorder les motifs, déterminer les alignements entre les régions et déterminer les dimensions de l'objet-mâchoire 3D le long des axes orthogonaux déterminés du balayage en maillage 3D (10).

7. Procédé mis en œuvre par ordinateur (100) selon l'une quelconque des revendications 1 à 6, dans lequel le balayage en maillage 3D (10) est un balayage 3D en couleur, et les un ou plusieurs algorithmes d'analyse comprennent l'extraction (126) de caractéristiques de couleur à partir du balayage 3D en couleur pour les comparer avec des caractéristiques de couleur similaires sur un modèle de référence 3D de mâchoire unique orienté patient spécifique, et la détermination de transformations d'alignement et des dimensions de l'objet-mâchoire 3D le long des axes orthogonaux déterminés du balayage en maillage 3D (10).

8. Procédé mis en œuvre par ordinateur (100) selon les revendications 1 à 7, dans lequel la dimension la plus longue déterminée est attribuée à l'axe Z, la dimension moyenne déterminée est attribuée à l'axe Y, et la dimension la plus courte déterminée est attribuée à l'axe X.

9. Procédé mis en œuvre par ordinateur (100) selon les revendications 1 à 8, dans lequel la transformation (140) du balayage en maillage 3D (10) comprend l'application (141) de translations le long des axes X, Y et/ou Z principaux attribués pour positionner le balayage en maillage 3D (10) à un emplacement cible prédéterminé dans le système de coordonnées CAO.

10. Procédé mis en œuvre par ordinateur (100) selon la revendication 9, comprenant en outre les étapes suivantes :
- calculer (1411) les points *Xcenter*, *Ycenter* et *Zcenter* représentant chacun le point central du balayage en maillage 3D (10) le long de chaque axe en utilisant des valeurs de coordonnées de sommet,
- calculer (1412) *deltaX* en tant que différence entre le point *Xcenter* du maillage et la coordonnée X de la position cible prédéterminée,
- calculer (1413) un *deltaY* en tant que différence entre le point *Ycenter* du maillage et la coordonnée Y de la position cible prédéterminée,
- calculer (1414) *deltaZ* en tant que valeur Z minimale des sommets du maillage, et
- effectuer une translation (1415) de toutes les coordonnées de sommet X de *deltaX*, de toutes les coordonnées de sommet Y de *deltaY* et de toutes les coordonnées de sommet Z de *deltaZ*, alignant ainsi le centre du balayage en maillage 3D (10) avec la position cible prédéterminée et faisant passer toute valeur de coordonnée Z négative à zéro ou à une valeur positive, de sorte que l'axe Z soit orienté positivement avec de toutes valeurs Z positives.

11. Procédé mis en œuvre par ordinateur (100) selon les revendications 1 à 10, dans lequel la transformation (140) du balayage en maillage 3D (10) comprend en outre l'application (142) de rotations autour des axes X, Y et/ou Z attribués du système de coordonnées CAO pour normaliser l'orientation du balayage en maillage 3D par rapport à un axe du système de CAO.

12. Procédé mis en œuvre par ordinateur (100) selon la revendication 10 ou 11 lorsque la revendication 11 dépend de la revendication 10, dans lequel la transformation (140) du balayage en maillage 3D (10) comprend ce qui suit :
- projecteur (1421) le balayage en maillage 3D (10) sur le plan 2D XY,
- calculer (1422) un angle delta, l'angle delta étant égal à la différence entre un premier angle α₁ formé entre le point de coin inférieur gauche (11) du balayage projeté 2D et un emplacement cible prédéterminé sur l'axe Y du système de coordonnées CAO, et un deuxième angle α₂ formé entre le point de coin inférieur droit (12) du balayage projeté 2D et l'emplacement cible prédéterminé sur l'axe Y,
- jusqu'à ce que l'angle delta calculé atteigne ou dépasse un angle seuil prédéterminé,
- appliquer (1423) une rotation d'axe Y au balayage en maillage 3D (10) en utilisant l'angle delta calculé,
- analyser (1424) le balayage en maillage 3D (10) après rotation en utilisant un ou plusieurs algorithmes d'analyse pour surveiller la progression de son alignement avec les axes du système de CAO et confirmer son positionnement dans le système de coordonnées,
- projeter (1425) le balayage en maillage 3D (10) après rotation sur le plan 2D XY, et
- recalculer (1426) un angle delta entre le point de coin inférieur gauche (11) et le point de coin inférieur droit (12) du balayage projeté après rotation par rapport à l'axe du système de coordonnées CAO.

13. Support lisible par ordinateur sur lequel sont stockées des instructions informatiques qui, lorsqu'elles sont exécutées par un processeur, mettent en œuvre un procédé mis en œuvre par ordinateur (100) selon l'une quelconque des revendications 1 à 12.

14. Système de conception assistée par ordinateur, CAO, 3D (200) comprenant,
- une ou plusieurs mémoires (210) destinées aux stockage,
- un balayage en maillage 3D (10) représentant la forme anatomique complète d'une mâchoire unique, et
- des instructions exécutables pour mettre en œuvre le procédé mis en œuvre par ordinateur (100) selon l'une quelconque des revendications 1 à 12,
- une ou plusieurs interfaces utilisateur (220),
- un ou plusieurs processeurs (230) couplés à la mémoire et à l'interface utilisateur, et configurés pour exécuter les instructions exécutables.
